# EUROPÄISCHE PATENTSCHRIFT

(11) **EP 1 758 702 B1**
(45) Veröffentlichungstag und Bekanntmachung des Hinweises auf die Patenterteilung: **07.03.2012**
(21) Anmeldenummer: 05761270.7
(22) Anmeldetag: 15.06.2005
(51) Int. Cl.: B23B 31/113

(54) **WERKZEUGAUFNAHMEHALTERUNG**
TOOL HOLDING FIXTURE
FIXATION DE SUPPORT D'OUTIL

(30) Priorität: 17.06.2004 DE 202004009500 U
(43) Veröffentlichungstag der Anmeldung: 07.03.2007
(73) Patentinhaber: mimatic GmbH, 87488 Betzigau (DE)
(72) Erfinder: PFOB, Franz, 87463 Probstried (DE); LEIDNER, Horst, 87452 Altusried (DE)
(74) Vertreter: Kloiber, Thomas
(86) Internationale Anmeldenummer: PCT/EP2005/006420
(87) Internationale Veröffentlichungsnummer: WO 2005/123314

(56) Entgegenhaltungen:
- DE-U- 7 341 015
- US-A- 2 337 402
- US-A- 3 747 946
- US-A- 4 906 147

## Beschreibung

Die Erfindung betrifft eine Vorrichtung zum Halten einer Werkzeugaufnahme, gemäß dem Obergriff des Anspruchs 1 und wie aus US-A-3.747.946 bekannt ist.

Nachteilig an der bekannten Vorrichtungen ist, daß sie eine relativ lange Bauform aufweisen und durch zentral angeordnete Betätigungsmittel keine zentrale Zufuhr von Medien, beispielsweise von Schmiermitteln, erlaubt. Siehe z.B. DE 37 81 559 T2.

Eine weitere Vorrichtung, bei der die Verriegelung der auszutauschenden Teile mittels Kugeln erfolgt, ist aus der DE 199 20 407 A1 bekannt. Auch diese Vorrichtung weist die zuvor genannten Nachteile auf.

Als nächstkommender Stand der Technik wird die US 3 747 946 A angesehen wird. Hierin ist eine Schnellverschluss-Werkzeugaufnahme mit einem inneren und einem äußeren Verriegelungselement, die miteinander in Eingriff treten, beschrieben, wobei die Verriegelungselemente nach Art eines Bajonettverschlusses wirkend ausgebildet sind. Allerdings beschränkt sich diese vorteilhafte Verriegelungsvorrichtung auf die Verbindung von Werkzeug und Werkzeughalter.

Weiterhin erfordert die dort beschriebene Bajonettverriegelung eine zweite Verriegelungsvorrichtung die eine Drehung des Werkzeugs in Entriegelungsrichtung verhindert.

In Bearbeitungszentren, bei denen beispielsweise auf den Revolverkopf angetriebene Werkzeuge gespannt werden, behindert eine große Baulänge der Vorrichtung den Arbeitsbereich der Werkzeuge am Werkstück. Deshalb sind kurzbauende Aufnahmevorrichtungen, die einfach, schnell und präzise einen Wechsel von angetriebenen Werkzeugen ermöglicht, von den Betreibern der Bearbeitungszentren gewünscht.

Aufgabe der Erfindung ist es, eine Vorrichtung zum Halten einer Werkzeugaufnahme zür Verfügung zu stellen, die eine besonders kurze Bauform aufweist, darüber hinaus eine axiale Zufuhr von Medien, wie beispielsweise Kühlschmiermittel, erlaubt.

Diese Aufgabe wird bei einer Vorrichtung zum Halten einer Werkzeugaufnahme, mit den Merkmalen des Anspruchs 1 gelöst. Auf diese Weise ist mit Vorteil die Betätigung der Verriegelung aus dem zentralen Bereich der Vorrichtung in die Peripherie verschoben. Die Verriegelung kann leicht manuell von außen erfolgen. Die Funktion einer solchen Verriegelung nach Art eines Bajonettverschlusses ist für das Bedienpersonal solcher Bearbeitungszentren selbsterklärend.

In Ausgestaltung der Erfindung ist vorgesehen, daß das vorstehende Element in der Bohrung der Spindel angeordnet ist und die Nut in einer Umfangsfläche des Schaftes der Werkzeugaufnahme. Auf diese Weise ergibt sich eine dynamisch besonders vorteilhafte, weil steife Halterung. Die Kontaktflächen der Schnittstelle werden durch die Verriegelung nur unwesentlich verringert bzw. geschwächt.

Denselben Vorteil bietet die Maßnahme, daß das vorstehende Element beweglich in einer Öffnung der Spindel gehalten ist und ein Feststellelement auf das vorstehende Element wirkend vorgesehen ist.

Mit Vorteil ist vorgesehen, das Feststellelement als Spannring mit einer auf das vorstehende Element wirkenden schrägen Auflauffläche ausgebildet ist. Durch die schräge Auflauffläche erfolgt eine weitere Verstärkung der Spannkraft. In den meisten Fällen reicht deshalb eine manuelle Betätigung des Spannrings ohne zusätzliche Werkzeuge zum Spannen aus.

Zur Erhöhung der Spannkräfte ist mit Vorteil zusätzlich vorgesehen, daß das Feststellelement einen Eingriff für einen Spannschlüssel zum Verstellen des Spannrings gegenüber der Spindel aufweist.

In alternativer Ausgestaltung kann die Spannung beispielsweise bequem auch mittels eines Sechskantschlüssels erfolgen, wenn ein Schneckengetriebe zwischen dem Spannring und der Spindel wirkend vorgesehen ist.

Durch die Maßnahme, daß der Spannring und die Spindel mittels eines Gewindes miteinander koaxial verschraubt sind, trägt ebenfalls vorteilhaft zur kurzen Bauform der Halterung bei.

Die Steifheit der Halterung wird vorteilhaft erhöht, wenn die Bohrung zur Aufnahme des Schaftes der Werkzeugaufnahme kegelig ausgebildet ist und die Umfangsfläche des Schaftes daran angepaßt ist.

Dasselbe gilt für die Maßnahme, daß die Werkzeugaufnahme eine Stützfläche zur Anlage an die nach vorn gerichtete Oberfläche der Spindel aufweist.

Mit Vorteil sind die Toleranzen so eng gewählt, daß die Vorrichtung eine statische Überbestimmung von Kontaktflächen zwischen Spindel und Werkzeugaufnahme aufweist, wobei nach dem Spannen insbesondere sowohl die kegeligen Flächen von Werkzeugaufnahme und Spindel als auch die nach vorn gerichtete Oberfläche mit der Stützfläche in Kontakt tretend ausgebildet ist. Die Schnittstelle verhält sich dadurch so, als sei sie einstückig.

Die neue Schnittstelle eignet sich besonders für das Spannen von Werkzeughaltern für CNC-Drehmaschinen etwa zur Bestückung von Werkzeugrevolvern, einschließlich Sternrevolvern. Sie kann aber auch ganz allgemein zum Zwecke der Spanntechnik im Vorrichtungsbau Verwendung finden, wobei anstelle von Werkzeugen in besonderen Fällen auch Werkstücke und dergleichen gespannt werden können.

Einzelheiten der Erfindung ergeben sich aus der nun folgenden Beschreibung eines bevorzugten Ausführungsbeispiels unter Bezugnahme auf die Zeichnung.

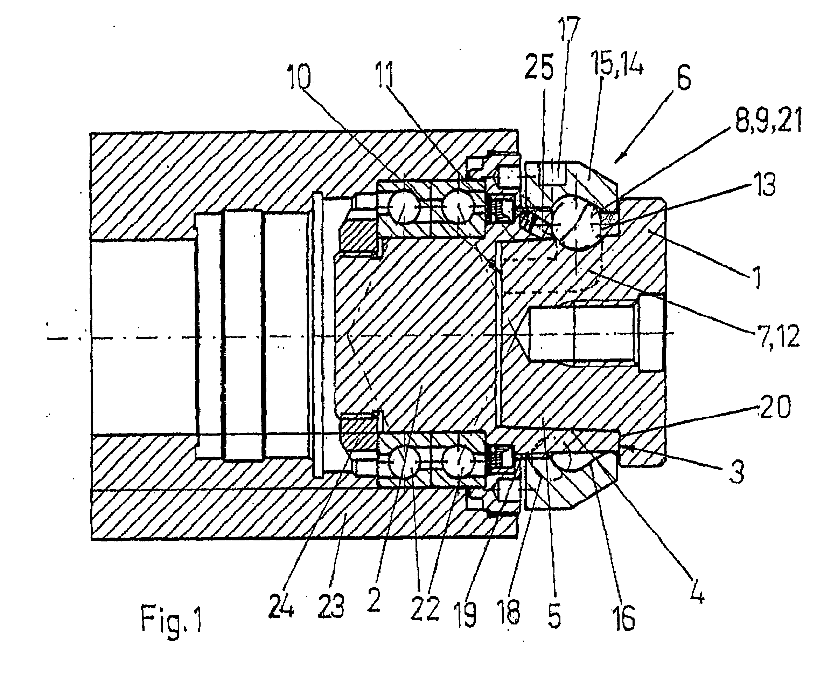

Darin zeigt die einzige Figur 1 einen axialen Schnitt durch die im wesentlich rotationssymmetrische erfindungsgemäße Halterung.

In Figur 1 ist die Werkzeugaufnahme 1 fest mit der Spindel 2 verspannt. Dabei liegt an einer nach vorn gerichteten Oberfläche 3 der Spindel 2 eine an diese angepaßte Stützfläche 20 der Werkzeugaufnahme 1 an. Außerdem liegen auch die kegeligen Flächen des Schaftes 5 der Werkzeugaufnahme 1 und der Bohrung 4 in der Spindel 2 fest aufeinander.

Diese statische Überbestimmung der Anlageflächen ist eine Folge der engen Fertigungstoleranz sowie der entsprechenden Spannkräfte.

Die Spannkräfte werden über den Spannring 15 aufgebracht. Der Spannring 15 kann entweder von Hand gegenüber der Spindel 2 verdreht werden oder mittels eines Schlüssels, der in den Schlüsseleingriff 17 faßt. Die Spindel 2 weist zu diesem Zweck ein Außengewinde 19 auf, auf das der Spannring mit seinem Innengewinde 19 aufgeschraubt ist. Eine innenkegelartige Auflauffläche 16, die im Spannring 15 eingearbeitet ist, drückt auf die Kugel 21, die ihrerseits über die in der Werkzeugaufnahme 1 eingearbeitete Nut 12 den Schaft 5 der Werkzeugaufnahme 1 in die kegelige Fläche der Bohrung 4 preßt. Auf diese Weise kann ein Drehmoment von der Spindel 2 über die kegeligen Fläche der Bohrung 4 und des Schaftes 5 auf die Werkzeugaufnahme 1 übertragen werden.

Durch Drehen des Spannrings 15 in die entgegengesetzte Richtung kann die Pressung aufgehoben werden und die beim Spannen zur Anlagenoberfläche 3 gelangende Stützfläche 20 getrennt werden. Sobald dies erfolgt ist, ist die Werkzeugaufnahme radial um einem bestimmten Winkel drehbar. Dabei kann sich die Nut 12, die in unterbrochener Linienführung angedeutet ist, über die Kugel 21 bewegen, bis die Kugel 21 an dem Ort angelangt ist, an dem die Nut ihre Richtung parralel zur Achse ändert. In dieser Stellung kann die Werkzeugaufnahme 1 axial aus der Spindel 2 gezogen werden, da die Nut 12 frei in der Stirnfläche 10 ausläuft. Die Nut 12 verläuft also von der Stirnfläche 10 zunächst in axialer Richtung und ändert dann die Richtung in Umfangsrichtung auf der Umfangsfläche 11, in der sie eingearbeitet ist.

Damit die Kugel 21 aus der Öffnung 13 der Spindel 2 nicht herausfällt, ist schräg ein federndes Rückhalteelement 25 in der Spindel vorgesehen. Dieses Rückhalteelement drückt auf die Kugel an geeigneter Stelle, so daß die Kugel gegen ein Herausfallen gesichert ist.

In strickpunktierter Linienführung ist alternativ zur Verstellung des Spannrings 15 mittels des Schlüsseleingriffs 17 ein Schneckengetriebe 18 angedeutet. Dieses kann beispielsweise mittels eines Sechskants betätigt werden, so daß es mit entsprechender Übersetzung den Spannring 15 auf dem Gewinde 19 verdreht.

In der Einrichtung 6 zum Verriegeln wirkt somit die Kugel 21 als vorstehendes Element 9 nach Art eines Bajonettverschlusses zum axialen Verriegeln des inneren Verriegelungselements 7 mit dem äußeren Verriegelungselement 8.

Die Spindel 2 ist ihrerseits in Kugellagern 22 im Gehäuse 23 drehbeweglich gehalten. Axial werden die Kugellager auf der Spindel 2 durch die Wellenmutter 24 gesichert.

Alle Teile sind rotationssymmetrisch angeordnet. Insgesamt werden mit Vorteil drei um jeweils 120 Grad versetzt angeordnete Einrichtungen zum Verriegeln vorgesehen.

Axial können Bohrungen vorgesehen werden, beispielsweise um Kühlschmiermittel zuzuführen.

Auf diese Weise ist eine universelle Schnittstelle geschaffen, die axial besonders kurz baut und eine vorteilhaft hohe dynamische Steifheit aufweist.

### BEZUGSZEICHENLISTE

- 1: Werkzeugaufnahme
- 2: Spindel
- 3: Oberfläche (nach vorn gerichtet)
- 4: Bohrung
- 5: Schaft
- 6: Einrichtung zum Verriegeln
- 7: Inneres Verriegelungselement
- 8: Äußeres Verriegelungselement
- 9: Vorstehendes Element
- 10: Stirnfläche
- 11: Umfangsfläche
- 12: Nut
- 13: Öffnung
- 14: Feststellelement
- 15: Spannring
- 16: Auflauffläche
- 17: Eingriff
- 18: Schneckengetriebe
- 19: Gewinde
- 20: Stützfläche
- 21: Kugel
- 22: Kugellager
- 23: Gehäuse
- 24: Wellenmutter
- 25: Rückhalteelement

## Patentansprüche

1. Vorrichtung zum Halten einer Werkzeugaufnahme (1), für angetriebene Werkzeuge, wobei diese Vorrichtung eine Spindel (2) aufweist, die eine nach vorn gerichtete Oberfläche (3) und eine Bohrung (4) besitzt, welche die nach vorn gerichtete Oberfläche schneidet und sich von dieser ausgehend rückwärts erstreckt, um einen Schaft (5) der Werkzeugaufnahme (1) aufzunehmen, sowie mit einer Einrichtung (6) zum Verriegeln der Werkzeugaufnahme mit der Spindel (2), bei der ein inneres (7) mit einem äußeren (8) Verriegelungselement, die miteinander in Eingriff treten, vorgesehen sind, **dadurch gekennzeichnet, daß** die Verriegelungselemente (7, 8) nach Art eines Bajonettverschlusses wirkend ausgebildet sind, wobei ein vorstehendes Element (9) in eine sich von einer Stirnfläche (10) zunächst axial dann radial in einer Umfangfläche (11) verlaufenden blind endenden Nut (12) angeordnet ist, wobei ein Feststellelement (14) auf das vorstehende Element (9) wirkend vorgesehen ist und wobei die Werkzeugaufnahme (1) eine Stützfläche (20) zur Anlage an die nach vorn gerichtete Oberfläche (3) der Spindel (2) aufweist und wobei sie eine statische Überbestimmung von Kontaktflächen zwischen Spindel (2) und Werkzeugaufnahme (1) aufweist, wobei nach dem Spannen insbesondere sowohl die kegeligen Flächen (11, 4) von Werkzeugaufnahme (1) und Spindel (2) als auch die nach vorn gerichtete Oberfläche (3) mit der Stützfläche (20) in Kontakt tretend ausgebildet ist..

2. Vorrichtung nach Anspruch 1, **dadurch gekennzeichnet, daß** das vorstehende Element (9) in der Bohrung (4) der Spindel (2) und die Nut (12) in der Umfangsfläche (11) des Schaftes (5) der Werkzeugaufnahme (1) angeordnet ist.

3. Vorrichtung nach Anspruch 1 oder 2, **dadurch gekennzeichnet, daß** das vorstehende Element (9) beweglich in einer Öffnung (13) der Spindel (2) gehalten ist.

4. Vorrichtung nach Anspruch 3, **dadurch gekennzeichnet, daß** das Feststellelement (14) als Spannring (15) mit einer auf das vorstehende Element (9) wirkenden schrägen Auflauffläche (16) ausgebildet ist.

5. Vorrichtung nach Anspruch 4, **dadurch gekennzeichnet, daß** das Feststellelement (14) einen Eingriff (17) für einen Spannschlüssel zum Verstellen des Spannrings (15) gegenüber der Spindel (2) aufweist.

6. Vorrichtung nach Anspruch 4, **dadurch gekennzeichnet, daß** ein Schneckengetriebe (18) zwischen dem Spannring (15) und der Spindel (2) wirkend vorgesehen ist.

7. Vorrichtung nach Anspruch 1, 2, 3, 4, 5 oder 6, **dadurch gekennzeichnet, daß** der Spannring (15) und die Spindel (2) mittels eines Gewindes (19) miteinander koaxial verschraubt sind.

8. Vorrichtung nach Anspruch 1, 2, 3, 4, 5, 6 oder 7, **dadurch gekennzeichnet, daß** die Bohrung (4) zur Aufnahme des Schaftes (5) der Werkzeugaufnahme (1) kegelig ausgebildet ist und die Umfangsfläche des Schaftes daran angepaßt ist.

## Claims

1. A device for holding a tool receptacle (1) for driven tools, wherein this device has a spindle (2) which has a surface (3) which is directed forwards and a hole (4) which intersects the surface which is directed forwards and extends therefrom backwards, in order to accommodate a shank (5) of the tool receptacle (1), and also with an apparatus (6) for locking the tool receptacle with the spindle (2), in the case of which an inner (7) and an outer (8) locking element, which engage with one another, are provided, **characterised in that** the locking elements (7, 8) are constructed in the manner of a bayonet closure, wherein a projecting element (9) is arranged in a groove (12) running from an end face (10) initially axially then radially in a circumferential surface (11) and ending in a blind manner, wherein a locking element (14) is provided acting on the projecting element (9) and wherein the tool receptacle (1) has a support surface (20) for bearing against the surface (3) of the spindle (2) which faces forwards and wherein it has a static overdefining of contact areas between spindle (2) and tool receptacle (1), wherein following the clamping, in particular both the conical surfaces (11, 4) of tool receptacle (1) and spindle (2) and the surface (3) which is directed forwards are constructed coming into contact with the support surface (20).

2. The device according to Claim 1, **characterised in that** the projecting element (9) is arranged in the hole (4) of the spindle (2) and the groove (12) is arranged in the circumferential surface (11) of the shank (5) of the tool receptacle (1).

3. The device according to Claim 1 or 2, **characterised in that** the projecting element (9) is held in a moveable manner in an opening (13) of the spindle (2).

4. The device according to Claim 3, **characterised in that** the locking element (14) is constructed as a clamping ring (15) with an oblique slope (16) acting on the projecting element (9).

5. The device according to Claim 4, **characterised in that** the locking element (14) has an engagement (17) for a chuck key for adjusting the clamping ring (15) with respect to the spindle (2).

6. The device according to Claim 4, **characterised in that** a worm gearing (18) is provided acting between the clamping ring (15) and the spindle (2).

7. The device according to Claim 1, 2, 3, 4, 5 or 6, **characterised in that** the clamping ring (15) and the spindle (2) are coaxially screwed to one another by means of a thread (19).

8. The device according to Claim 1, 2, 3, 4, 5, 6 or 7, **characterised in that** the hole (4) for accommodating the shank (5) of the tool receptacle (1) is constructed in a conical manner and the circumferential surface of the shank is adapted thereto.

## Revendications

1. Dispositif pour le maintien d'un porte-outil (1), pour des outils entraînés, ce dispositif comportant une broche (2) possédant une surface (3) orientée vers l'avant ainsi qu'un perçage (4) croisant la surface orientée vers l'avant et s'étendant vers l'arrière à partir de celle-ci, pour accueillir une tige (5) du porte-outil (1), et avec un dispositif (6) pour le verrouillage du porte-outil avec la broche (2), dans lequel sont prévus un élément de verrouillage interne (7) et un élément de verrouillage externe (8) en prise l'un avec l'autre, **caractérisé en ce que** les éléments de verrouillage (7, 8) sont conçus à la manière d'une fermeture à baïonnette, dans lequel un élément saillant (9) est disposé dans une rainure (12) finissant aveugle et s'étendant d'abord axialement puis radialement dans une surface périphérique (11) à partir d'une surface frontale (10), dans lequel il est prévu un élément de blocage (14) agissant sur l'élément saillant (9), et dans lequel le porte-outil (1) comporte une surface de support (20) pour l'appui contre la surface (3) de la broche (2) orientée vers l'avant, et dans lequel il présente une concordance statique des surfaces de contact entre la broche (2) et le porte-outil (1), où suite au serrage, en particulier aussi bien les surfaces coniques (11, 4) du porte-outil (1) et de la broche (2) que la surface orientée vers l'avant (3) sont conçues de manière à entrer en contact avec la surface d'appui (20).

2. Dispositif selon la revendication 1, **caractérisé en ce que** l'élément saillant (9) est disposé dans le perçage (4) de la broche (2) et la rainure (12) est disposée dans la surface périphérique (11) de la tige (5) du porte-outil (1).

3. Dispositif selon la revendication 1 ou 2, **caractérisé en ce que** l'élément saillant (9) est maintenu de façon mobile dans une ouverture (13) de la broche (2).

4. Dispositif selon la revendication 3, **caractérisé en ce que** l'élément de blocage (14) est conçu comme une bague de serrage (15), avec une surface d'attaque (16) oblique agissant sur l'élément saillant (9).

5. Dispositif selon la revendication 4, **caractérisé en ce que** l'élément de blocage (14) comporte un engagement (17) pour une clé de serrage, pour le réglage de la bague de serrage (15) par rapport à la broche (2).

6. Dispositif selon la revendication 4, **caractérisé en ce qu'**il est prévu un engrenage à vis sans fin (18) agissant entre la bague de serrage (15) et la broche (2).

7. Dispositif selon la revendication 1, 2, 3, 4, 5 ou 6, **caractérisé en ce que** la bague de serrage (15) et la broche (2) sont vissées ensemble coaxialement au moyen d'un filetage (19).

8. Dispositif selon la revendication 1, 2, 3, 4, 5, 6 ou 7, **caractérisé en ce que** le perçage (4) pour l'admission de la tige (5) du porte-outil (1) est conçu conique, et la surface périphérique de la tige est adaptée à celui-ci.
